(19) Europäisches Patentamt
European Patent Office
Office européen des brevets

(11) **EP 2 565 522 B1**

(12) **FASCICULE DE BREVET EUROPEEN**

(45) Date de publication et mention de la délivrance du brevet:
**14.04.2021 Bulletin 2021/15**

(21) Numéro de dépôt: **12182891.7**

(22) Date de dépôt: **04.09.2012**

(51) Int Cl.:
*F21S 41/155* *(2018.01)*   *F21S 41/255* *(2018.01)*
*F21S 41/26* *(2018.01)*   *F21S 41/32* *(2018.01)*
*F21S 41/365* *(2018.01)*   *F21S 41/43* *(2018.01)*
*F21V 5/00* *(2018.01)*

(54) **Projecteur pour véhicule automobile**

Scheinwerfer für Kraftfahrzeug

Headlight for automobile

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2011 FR 1157840**

(43) Date de publication de la demande:
**06.03.2013 Bulletin 2013/10**

(73) Titulaire: **VALEO VISION**
**93012 Bobigny Cedex (FR)**

(72) Inventeur: **Albou, Pierre**
**75013 PARIS (FR)**

(56) Documents cités:
**EP-A1- 1 610 057   EP-A1- 1 762 776**
**EP-A1- 2 131 098   EP-A1- 2 278 217**

## Description

La présente invention concerne un projecteur pour véhicule automobile, pour donner un faisceau lumineux à coupure, du genre de ceux qui comportent :

- un miroir collecteur présentant un axe,
- une source lumineuse placée au voisinage du foyer interne du miroir collecteur,
- une plieuse, sensiblement plane, dont la surface réfléchissante est orientée vers l'intérieur du miroir collecteur et qui présente un bord constitué par une courbe plane,
- une lentille, située en avant du miroir collecteur et de la plieuse, pour donner une image du bord de la plieuse qui définit la coupure du faisceau.

Dans un tel type de projecteur, la forme de la lentille est généralement déterminée a posteriori par calcul pour obtenir le faisceau lumineux désiré, une fois les caractéristiques de la source, du miroir collecteur et de la plieuse arrêtées.

En particulier, il est possible de déterminer la forme de la lentille section par section, en résolvant un système d'équations dans le but d'optimiser le profil de coupure.

Un projecteur de ce type est connu, notamment d'après les documents FR 2 940 404 et EP 1 610 057 au nom de la Société demanderesse. Selon ces documents, la lentille est déterminée pour donner d'un point du bord de la plieuse une image à l'infini.

Néanmoins tous les calculs réalisés prennent pour hypothèse l'utilisation d'une source lumineuse ponctuelle. Il est en effet usuel de procéder de cette façon mais lorsque la focale du miroir collecteur est faible et la source lumineuse plus volumineuse, comme par exemple dans le cas de l'utilisation de diode électroluminescente de forte puissance, il n'est pas rare que la distance focale soit du même ordre de grandeur que la dimension transversale de la source lumineuse. Des aberrations importantes surviennent alors et dégradent notablement la qualité du faisceau lumineux.

Ce phénomène survient plus souvent dans le cas d'un module à faisceau convergent.

L'invention a pour but, surtout, de fournir un projecteur qui permet une coupure plate, sans remontée de lumière, même avec une source lumineuse large et des lentilles convergentes non stigmatiques toriques conjuguées à un réflecteur et une plieuse.

Selon l'invention, un projecteur pour véhicule automobile du genre défini précédemment est caractérisé en ce que la lentille est déterminée de telle sorte que pour chaque section de la lentille par un plan orthogonal au bord de la plieuse, en un point de ce bord, le foyer de ladite section se trouve à une distance du point du bord de la plieuse suivant une direction orthogonale au plan de la plieuse, la distance pouvant être nulle.

Généralement, la plieuse est horizontale et le foyer de ladite section se trouve à une distance verticale du bord de la plieuse.

Selon l'invention, la distance est variable en fonction de la position du point du bord de la plieuse.

Avantageusement, pour chaque section de la lentille par un plan orthogonal au bord de la plieuse, en un point de ce bord, la partie haute de la section située au-dessus du plan de la plieuse admet un foyer se trouvant à une distance du bord de la plieuse suivant une direction orthogonale au plan de la plieuse, tandis que la partie basse de la section située au-dessus du plan de la plieuse admet un foyer se trouvant à une autre distance du bord de la plieuse suivant une direction orthogonale au plan de la plieuse.

De préférence, les distances des foyers des parties haute et basse de la lentille au bord de la plieuse varient en sens inverse, du centre du bord de la plieuse vers ses extrémités latérales.

Avantageusement, dans le cas d'un projecteur à coupure horizontale, pour la partie haute de la lentille, la distance du foyer d'une section au bord de la plieuse décroît du centre du bord de plieuse vers ses extrémités latérales, et pour la partie basse de la lentille, la distance du foyer d'une section au bord de la plieuse croît du centre du bord de plieuse vers ses extrémités latérales. Pour la partie haute de la lentille, la distance du foyer au bord de la plieuse peut être nulle au centre, cette distance devenant négative en direction des extrémités latérales du bord, tandis que, pour la partie basse de la lentille, la distance du foyer au bord de la plieuse peut être nulle aux extrémités latérales du bord de la plieuse et négative au centre.

Dans le cas d'un module convergent, la lentille peut comporter une face avant présentant une zone active et au moins une zone non active. La surface de la zone active peut être inférieure à la surface de la face d'entrée de la lentille.

D'autres caractéristiques et avantages de l'invention apparaîtront dans la description qui suit avec référence aux dessins annexés mais qui n'a aucun caractère limitatif. Sur ces dessins :

Fig. 1 est une représentation schématique en perspective d'un projecteur selon l'invention,
Fig. 2 est une représentation schématique en perspective d'une section verticale partielle, illustrant le cheminement des rayons lumineux,
Fig. 3 est une représentation schématique en coupe dans un plan vertical, pour le calcul d'une section de la lentille,
Fig. 4 est une représentation des courbes illustrant les variations des distances verticales du foyer, $h_0^+$ pour la partie haute, et $h_0^-$ pour la partie basse, portées en ordonnées, en fonction de l'abscisse du point du bord de la plieuse, porté en abscisse, par lequel passe le plan de la section considérée,
Fig. 5 est une représentation des courbes isolux du faisceau obtenu à partir du projecteur selon l'invention,
Fig. 6 est une vue de l'avant en perspective d'un projecteur selon l'invention,
Fig. 7 est une vue similaire à Fig. 6 illustrant, à plus petite échelle, une variante du projecteur selon l'invention, et
Fig.8 est une coupe schématique horizontale, à plus grande échelle, du projecteur de Fig.7.

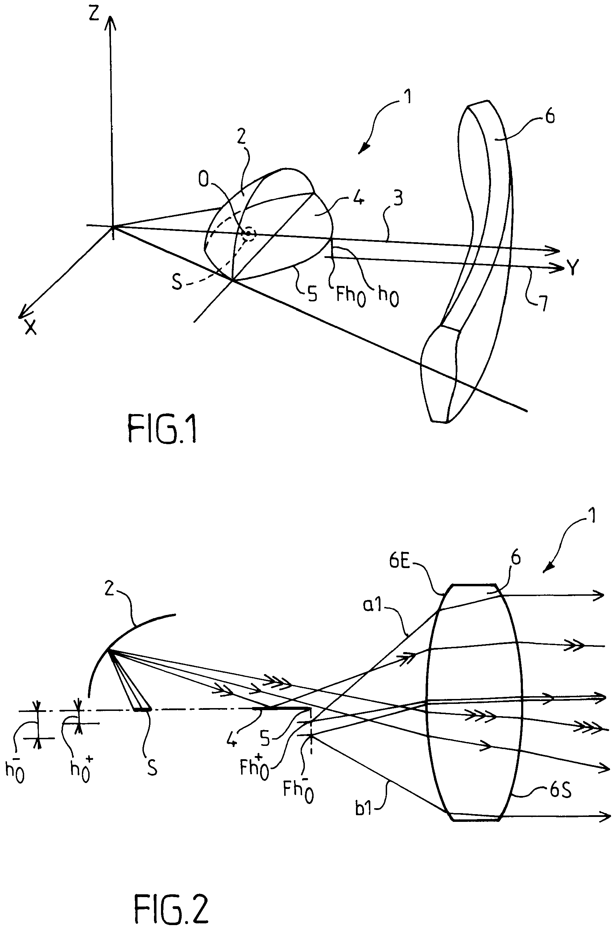

En se référant aux Fig. 1, 2 et 3, on peut voir qu'un projecteur 1 selon l'invention comporte un miroir collecteur 2 concave présentant un axe 3.

Le projecteur 1 est destiné à être installé sur un véhicule automobile (non représenté), la concavité du miroir collecteur 2 étant orientée sensiblement vers l'avant du véhicule. Lors de la description des différents éléments composant le projecteur 1, les termes « vertical », « horizontal », « supérieur » ou « inférieur » font référence à la position du projecteur 1 une fois mis en place sur un véhicule automobile.

Le projecteur 1 comporte également une plieuse 4 constituée d'un miroir dont la surface réfléchissante est orientée vers l'intérieur du miroir collecteur 2. La plieuse 4 est disposée dans un plan contenant l'axe 3. La plieuse 4 comporte un bord 5 constitué par une courbe plane dont l'image, donnée par une lentille 6 disposée en avant, définit la coupure du faisceau lumineux émis par le projecteur 1. La lentille 6 comporte un axe optique 7 parallèle à l'axe 3.

Dans le repère illustré sur les figures, l'axe y est l'axe optique du module, confondu avec l'axe 3 du miroir 2, généralement horizontal. L'axe des z est un axe vertical. Le bord de plieuse est contenu dans le plan z= 0. L'axe des abscisses x est horizontal, orthogonal au plan formé par l'axe des y et l'axe des z.

Une source lumineuse S est disposée de manière qu'un point de l'émetteur, généralement le point à émission maximum de lumière, soit confondu avec le foyer interne O du miroir collecteur 2. La distance pseudo-focale du miroir collecteur 2 peut être faible, notamment de l'ordre de 2,5 mm (la distance pseudo-focale est égale à la distance du point O au fond du réflecteur, point du réflecteur de coordonnée suivant y la plus faible). La source lumineuse peut être constituée d'une diode électroluminescente, ou LED, de puissance, notamment de forme rectangulaire, dont la grande dimension est orientée transversalement à l'axe des y. Cette grande dimension de la LED peut être de 5 mm.

Avantageusement, on choisit la forme et les caractéristiques de la face d'entrée 6E, ou dioptre d'entrée de la lentille, et on calcule le dioptre de sortie comme exposé par la suite.

Lors du calcul d'une section de la lentille 6 dans un plan orthogonal au bord 5, en un point de ce bord, de la manière exposée dans FR 2 940 404, on choisit un foyer $Fh_0$ situé à distance verticale du point du bord 5 par lequel passe le plan de construction.

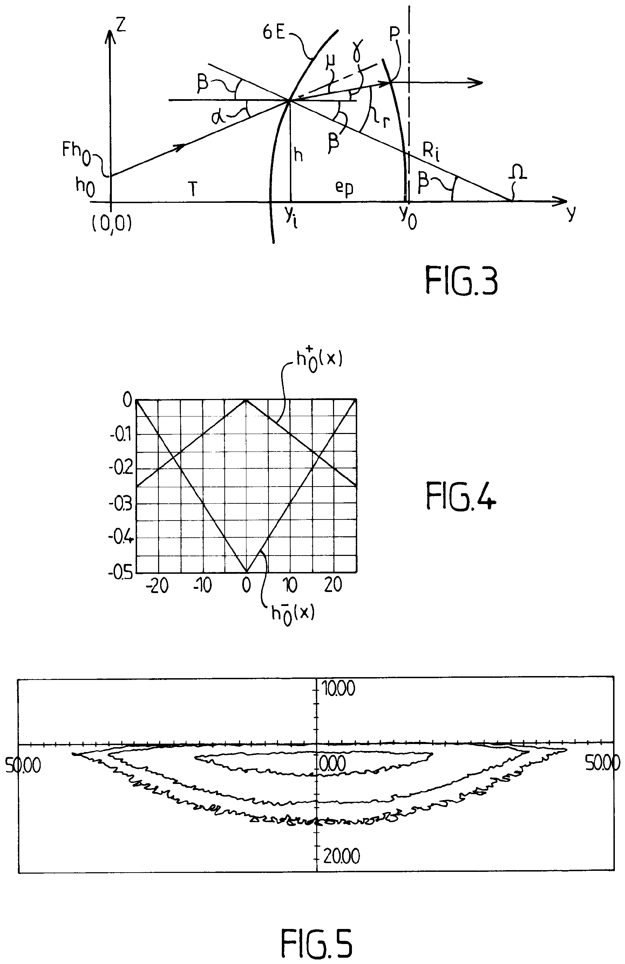

Le foyer $Fh_0$ peut être au-dessus du plan de la plieuse 4, comme sur le schéma de Fig. 3, auquel cas $h_0$ est positif, ou au-dessous du plan de la plieuse comme illustré sur Fig.2 pour un faisceau à coupure de type code ou antibrouillard, auquel cas $h_0$ est négatif.

La distance verticale $h_0$ du foyer $Fh_0$ au bord 5 va dépendre de la position du point considéré sur ce bord. Dans le mode de réalisation considéré cette hauteur $h_0$ est choisie fonction de l'abscisse x du point du bord 5.

Un rayon réfléchi par la plieuse 4 est ensuite dévié par la partie haute de la lentille 6, située au-dessus du plan de la plieuse 4, tandis qu'un rayon non réfléchi par la plieuse 4 est dévié par la partie basse de la lentille, située au-dessous du plan de la plieuse 4. Les chemins optiques de ces rayons seront différents, et il est préférable de traiter différemment le calcul des parties haute et basse de la lentille 6.

La distance verticale $h_0$ du foyer $Fh_0$ au bord 5 va donc dépendre :

- du point considéré du bord 5 de plieuse, par lequel passe le plan de coupe vertical orthogonal au bord 5 ; la distance verticale $h_0$ peut notamment varier en fonction de l'abscisse x du point considéré ;
- et de la partie haute ou basse de la lentille 6 qui est calculée

Cette distance verticale du foyer $Fh_0$ sera noté $h_0^+$ pour la partie haute de la lentille, et $h_0^-$ pour la partie basse de la lentille. Le foyer correspondant sera désigné par $F\,h_0^+$ et $F\,h_0^-$.

La limite du côté haut et du côté bas de la lentille est définie, pour le calcul, par la hauteur limite $h_l[h_0^+(x)]$ ou $h_l[h_0^-(x)]$ du point sur le dioptre torique d'entrée qui correspond au point commun $(y,z) = (y_0,0)$ des sections des parties haute et basse de la surface de sortie de la lentille.

Dans les calculs qui suivent, l'axe des y est l'axe horizontal contenu dans le plan de construction orthogonal au bord 5 de la plieuse, et passant par le point du bord d'abscisse x dans le repère absolu, point origine du repère local de construction.

Le repère absolu est un repère indépendant de la section considérée, l'axe y est alors l'axe optique du module ou projecteur ; l'axe des z est un axe vertical, à la fois dans le repère absolu et dans les repères de construction des sections de la lentille. Les cotes en z sont identiques entre ces différents repères puisque le bord 5 de plieuse est contenu dans le plan z=0 du repère absolu.

Pour la partie haute de la lentille, la lumière montante provient des bords des images centrales atteignant les extrémités latérales de la plieuse, il convient donc de prendre $h_0^+(x)$ décroissant du centre du bord de plieuse vers ses extrémités latérales, et on peut avoir $h_0^+(0)=0$ (voir Fig.4).

Pour la partie basse de la lentille, la lumière montante provient de bords d'images latérales passant au centre de la plieuse. On doit donc prendre $h_0^-(0)<0$

et on peut prendre $h_0^-(x)$ croissant du centre du bord de plieuse vers ses extrémités latérales. De préférence $h_0^- = 0$ aux extrémités du bord avant de la plieuse (voir Fig.4).

Le calcul de la lentille est effectué avec référence à Fig.3, section par section dans des plans verticaux orthogonaux aux points successifs du bord 5 de la plieuse, formé par une courbe que l'on peut choisir.

Le dioptre d'entrée 6E, ou face d'entrée, de la section de la lentille est choisi en arc de cercle convexe vers le miroir, et de rayon Ri, centré en un point $\Omega$ sur l'axe des y. On choisit la valeur de la distance T du foyer de la section de la lentille au point du dioptre d'entrée sur l'axe des y. L'épaisseur de la section de la lentille selon l'axe des y est désignée par $e_p$.

Le but du calcul est de déterminer le dioptre de sortie de la lentille en partie haute et basse.

Sur Fig.3, $h_0$ a été choisi positif et le foyer $F h_0$ est situé au-dessus du bord de la plieuse. Le calcul s'applique quel que soit le signe de $h_0$, et donc que le foyer soit au-dessus ou au-dessous du bord de la plieuse.

Un point courant du dioptre ou face d'entrée 6E, d'altitude h suivant l'axe des z, est vu depuis le centre du dioptre sous un angle $\beta$ :

$$\beta = \text{arc sin } (h/R_i)$$

La coordonnée $y_i$ de ce point courant, suivant l'axe des y s'exprime :

$$y_i = T + R_i - R_i \cos\beta$$

Un rayon provenant du foyer $Fh_0$ tombe sur le point courant sous un angle $\alpha$ par rapport à l'horizontale avec :

$$\alpha = \text{arc tg } [(h-h_0)/y_i]$$

On désigne par $n_l$ l'indice de réfraction de la lentille, par r l'angle de réfraction. La normale au dioptre, au point courant considéré, est confondue avec le rayon géométrique issu du centre $\Omega$. L'angle d'incidence est égal à $\alpha + \beta$. La loi de réfraction s'écrit alors :

$$n_l \sin r = \sin(\alpha + \beta)$$

On désigne par $\gamma$ l'angle du rayon réfracté avec la parallèle (horizontale) à l'axe des y, avec

$$\gamma = r - \beta$$

On désigne par $y_0$ la coordonnée du point du dioptre ou face de sortie sur l'axe des y ; on peut écrire :

$$y_0 = T + e_p$$

On désigne par K le chemin optique entre le foyer $Fh_0$ de la section de la lentille et l'onde plane verticale de sortie tangente au dioptre de sortie au point situé sur l'axe des y. La longueur, ou module, du rayon optique réfracté entre le dioptre d'entrée et le point P du dioptre de sortie est désignée par $\mu$. De sorte que :

$$[\sqrt{(y_i^2 + (h-h_0)^2)}] + n_l\mu + y_0 - y_p = K$$

où

$$y_p = y_i + \mu\cos\gamma$$

donc

$$(n_l - \cos\gamma)\mu = K - (y_0 - y_i) - [\sqrt{(y_i^2 + (h-h_0)^2)}]$$

et

$$z_p = h + \mu\sin\gamma$$

d'où $y_p(h_0, K, h)$
et $z_p(h_0, K, h)$, coordonnées du point P du dioptre de sortie.

On définit $h_\rho(h_0)$ et $K(h_0)$ tels que $y_p[h_0, K(h_0), h_\rho(h_0)] = y_0$
et $z_p[h_0, K(h_0), h_\rho(h_0)] = 0$

$h_\rho(h_0)$ et $K(h_0)$ sont solutions d'un système de deux équations à deux inconnues, paramétré en $h_0$ :

$$y_p(h_0, a, b) = y_0$$
$$z_p(h_0, a, b) = 0$$
$$h_0 \text{ fixé, on a :}$$

$$y_p = y_{ph0}(h)$$

$$z_p = z_{ph0}(h)$$

Soit $h_0 = h_0^+$ pour la partie haute de la lentille et $h_0 = h_0^-$ pour la partie basse de la lentille
alors $y_p = y_{ph0+}(h)$ pour $h \geq h_\rho(h_0^+)$ et $y_p = y_{ph0-}(h)$ pour $h \leq h_\rho(h_0^-)$ Le même raisonnement vaut pour $z_p$

En outre $h_0^+ = h_0^+(x)$ et $h_0^- = h_0^-(x)$ où x est l'abscisse du point du bord de la plieuse par lequel passe le plan vertical orthogonal au bord de plieuse et dans lequel est valable la construction de la section de la lentille détaillée précédemment.

La courbure du bord de plieuse en son point d'abscisse x est C=1/R(x), ce qui, avec un point de passage et une condition de tangente parallèle à l'axe des x en x=0, définit le bord de plieuse.

$h_0^+(x)$, $h_0^-(x)$ et R(x) sont des paramètres de conception du système.

Fig.4 illustre un exemple de variation des valeurs pour $h_0^+(x)$, $h_0^-(x)$, portées en ordonnée, en fonction de l'abscisse x du point du bord 5 de la plieuse, porté en abscisse . Les abscisses sont données en valeurs positives et négatives à partir du centre du bord de la plieuse d'abscisse 0.

Les variations de $h_0^+(x)$, pour la partie haute de la lentille, sont représentées par deux segments inclinés, formant un accent circonflexe dont la pointe correspond au centre du bord de la plieuse d'abscisse 0. La valeur maximum $h_0^+(0)$ peut être choisie égale à 0 : $h_0^+(0) = 0$. La valeur de $h_0^+(x)$ décroît du centre du bord de la plieuse vers ses extrémités latérales, jusqu'à - 0.25 mm selon Fig.4. On obtient une bonne correction du faisceau et de la coupure, du fait que pour la partie haute de la lentille, la lumière montante provient des bords des images centrales atteignant les points latéraux de la plieuse.

Les variations de $h_0^-(x)$, pour la partie basse de la lentille, sont représentées par deux segments inclinés, formant un V dont la pointe correspond au centre du bord de la plieuse d'abscisse 0. La valeur minimum $h_0^-(0)$ est choisie inférieure à 0 : $h_0^-(0) < 0$, égale à - 0.5mm selon Fig.4. La valeur de $h_0^-(x)$ est croissante du centre de la plieuse vers ses bords, avec de préférence $h_0^-$ égal à 0 ($h_0^- = 0$) vers ses extrémités latérales. On obtient une bonne correction du fait que, pour la partie basse de la lentille, la lumière montante provient des bords d'images latérales passant au centre de la plieuse.

Un exemple de cas concret de lentille correspond aux valeurs ci-dessous.

c = 20mm ; c est la distance entre O et l'intersection de l'axe 3 et de la courbe 5
f (pseudo-focale)= 6mm ; T = 10mm; Ri = 50mm;
$e_p$ = 22.57mm; $n_l$ = 1.49 (PMMA) ; R(x) = - 40mm

Le trajet des rayons lumineux dans une section par un plan vertical orthogonal au bord 5 de la plieuse, en un point d'abscisse x, est illustré schématiquement sur Fig.2. On a considéré un projecteur de type antibrouillard, à faisceau situé au-dessous d'une ligne de coupure horizontale. La section est effectuée en un point du bord 5 pour lequel le foyer $Fh_0^+$ de la partie haute de la lentille est situé à la verticale du bord 5, au-dessous à une distance $h_0^+$, tandis que le foyer $Fh_0^-$ de la partie basse de la lentille est situé à la verticale du bord 5, au-dessous à une distance $h_0^-$, supérieure en valeur absolue à $h_0^+$. Les positions des foyers pourraient être différentes de celles illustrées sur Fig. 2, selon la position du plan de section vertical.

Un rayon émis du centre de la source S, situé au voisinage d'un premier foyer du réflecteur 2 est réfléchi par le réflecteur 2 suivant un rayon qui rencontre le bord 5 de la plieuse et est contenu dans le plan normal à ce bord au point de rencontre. Ce rayon réfléchi est repéré par une seule pointe de flèche. Ce rayon moins incliné que la direction b1 sort de la lentille selon une direction descendante.

Un rayon émis du bord de la source S le plus proche de la lentille est réfléchi par le réflecteur 2 suivant un rayon, repéré par deux pointes de flèche, qui frappe la plieuse 4 en arrière du bord 5 et est réfléchi, par cette plieuse, pour monter vers la lentille 6 et rencontrer la partie haute. Ce rayon moins incliné que la direction a1 sort de la lentille selon une direction descendante.

Un rayon émis du bord de la source S le plus éloigné de la lentille est réfléchi par le réflecteur 2 suivant un rayon, repéré par trois pointes de flèche, qui passe en avant du bord 5 de la plieuse 4, sans être réfléchi, pour descendre vers la lentille 6 et rencontrer la partie basse. Ce rayon moins incliné que la direction b1 sort de la lentille selon une direction descendante.

D'une manière générale, le réflecteur 2 est construit comme décrit dans la demande de brevet FR 2 940 404 déjà citée.

La coupure horizontale est bien assurée avec des rayons sortant horizontaux ou descendants.

L'allure générale du faisceau obtenu est illustrée sur Fig. 5 à l'aide de courbes isolux de la trace du faisceau sur un écran orthogonal à l'axe optique. On peut constater que l'éclairage est quasi nul au-dessus de la ligne horizontale de coupure.

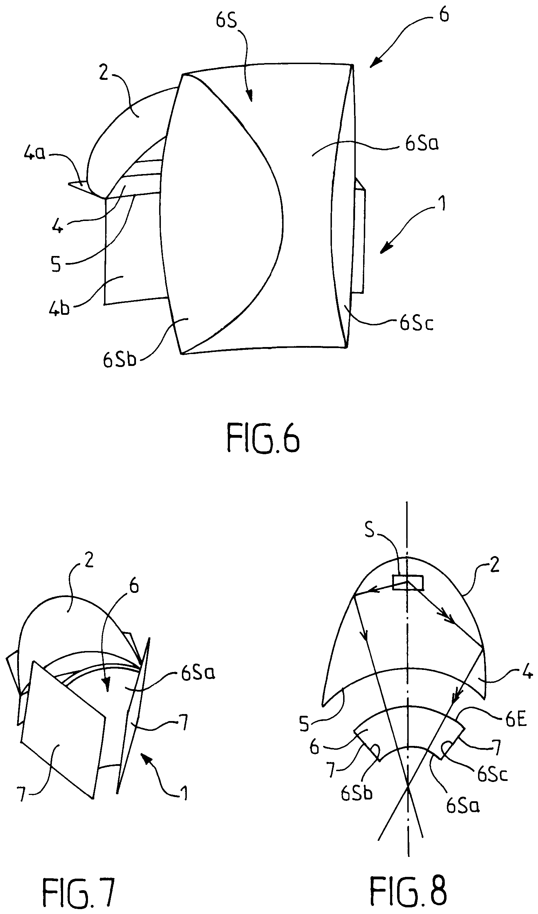

Un exemple de projecteur constitué d'un module convergent, selon l'invention, est plus particulièrement visible sur Fig. 6 à 8, où l'on aperçoit le réflecteur 2, de forme concave, à l'intérieur duquel est installée la source lumineuse S, visible sur Fig.8.

La plieuse 4 comprend une première partie 4a plane horizontale, située sous le réflecteur 2, et une seconde partie 4b verticale formant un angle de 90° avec la première partie 4a. L'intersection entre les parties 4a et 4b forme le bord de coupure 5, en arc de courbe concave vers la lentille 6.

La face avant 6S de la lentille 6 comporte trois zones. Une première zone centrale 6Sa (face de sortie) seule active est encadrée par deux zones planes 6Sb et 6Sc.

La surface de la zone 6Sa a été déterminée par le calcul explicité précédemment. Comme il apparaît sur les Fig. 7 et 8, la coupe de la zone 6Sa par un plan horizontal est une courbe concave, tournant sa concavité vers l'avant, c'est à dire du côté opposé au réflecteur. Les zones planes 6Sb et 6Sc relient la face d'entrée 6E de la lentille 6 avec la zone 6Sa, et n'ont pas de rôle optique dans l'élaboration du faisceau lumineux. Seule la partie 6Sa est active et intervient sur le faisceau.

Fig.8 illustre le trajet de deux rayons lumineux, provenant du centre de la source lumineuse S, marqués respectivement d'une et de deux pointes de flèche, réfléchis par le réflecteur 2 dans des plans verticaux respectifs, orthogonaux au bord 5 de plieuse. Les plans verticaux des deux rayons tracés sont également orthogonaux aux coupes par le plan horizontal de la face d'entrée 6E et de la face de sortie 6Sa de la lentille .Fig.8 fait apparaître le faisceau convergent obtenu, dont le point de convergence est situé en avant de la lentille 6.

La forme caractéristique de la lentille 6 permet au projecteur selon l'invention d'être facilement identifiable et constitue un atout d'un point de vue esthétique.

Le caractère neutre des zones 6Sb et 6Sc peut être mis à profit pour mettre en place des parois opaques 7 contre ces zones, sans impact néfaste sur le faisceau lumineux comme illustré Fig. 7 et 8. Malgré une surface nettement inférieure à celle de la face d'entrée 6E, la surface réduite de la zone active 6Sa ne constitue pas un handicap pour la création d'un faisceau lumineux à coupure, avec module convergent.

## Revendications

1. Projecteur (1) pour véhicule automobile, pour donner un faisceau lumineux à coupure, comportant :

    - un miroir collecteur (2) présentant un axe (3),
    - une source lumineuse (S) placée au voisinage du foyer interne du miroir collecteur (2),
    - une plieuse (4), sensiblement plane, dont la surface réfléchissante est orientée vers l'intérieur du miroir collecteur (2) et qui présente un bord (5) constitué par une courbe plane,
    - une lentille (6), située en avant du miroir collecteur (2) et de la plieuse (4), pour donner une image du bord (5) de la plieuse (4) qui définit la coupure du faisceau, **caractérisé en ce que** la lentille (6) est déterminée de telle sorte que pour chaque section de la lentille (6) par un plan orthogonal au bord (5) de la plieuse, en un point de ce bord, le foyer ($Fh_0$) de ladite section se trouve à une distance (ho) du point du bord (5) de la plieuse (6) suivant une direction orthogonale au plan de la plieuse , la distance (ho) pouvant être nulle, **et en ce que** la distance ($h_0$ est variable en fonction de la position du point du bord (5) de la plieuse.

2. Projecteur selon la revendication 1, **caractérisé en ce que** la plieuse est horizontale et le foyer (F ho) de ladite section se trouve à une distance verticale (ho) du bord (5) de la plieuse (6).

3. Projecteur selon l'une quelconque des revendications précédentes, **caractérisé en ce que**, pour chaque section de la lentille (6) par un plan orthogonal au bord (5) de la plieuse (6), en un point de ce bord, la partie haute de la section située au-dessus du plan de la plieuse admet un foyer ($Fh_0^+$) se trouvant à une distance ($h_0^+$) du bord (5) de la plieuse (6) suivant une direction orthogonale au plan de la plieuse, tandis que la partie basse de la section située au-dessous du plan de la plieuse admet un foyer ($Fh_0^-$) se trouvant à une autre distance ($h_0^-$) du bord (5) de la plieuse (6) suivant une direction orthogonale au plan de la plieuse.

4. Projecteur selon la revendication 3, **caractérisé en ce que** les distances ($h_0^+$) et ($h_0^-$) des foyers ($Fh_0^+$) et ($Fh_0^-$) au bord de la plieuse varient en sens inverse, du centre du bord de la plieuse vers ses extrémités latérales.

5. Projecteur selon la revendication 4, à coupure horizontale, **caractérisé en ce que**, pour la partie haute de la lentille, la distance $h_0^+(x)$ du foyer d'une section au bord de la plieuse décroît du centre du bord de plieuse vers ses extrémités latérales, et pour la partie basse de la lentille, la distance $h_0^-(x)$ du foyer d'une section au bord de la plieuse croît du centre du bord de plieuse vers ses extrémités latérales.

6. Projecteur selon la revendication 5 **caractérisé en ce que**, pour la partie haute de la lentille, la distance $h_0^+(0)$ du foyer au bord de la plieuse est nulle ($h_0^+(0)=0$) au centre, cette distance devenant négative en direction des extrémités latérales du bord, tandis que, pour la partie basse de la lentille, la distance $h_0^-(x)$ du foyer au bord de la plieuse est nulle ($h_0^-=0$) aux extrémités latérales du bord de la plieuse et est négative au centre.

7. Projecteur selon l'une quelconque des revendications précédentes à module convergent, **caractérisé en ce que** la lentille (6) comporte une face avant présentant une zone active (6Sa) et au moins une zone non active (6Sb, 6Sc).

8. Projecteur selon la revendication 7, **caractérisé en ce que** la surface de la zone active (6Sa) est inférieure à la surface de la face d'entrée (6E) de la lentille.

## Patentansprüche

1. Scheinwerfer (1) für Kraftfahrzeuge zum Erzeugen eines Lichtbündels mit Hell-Dunkel-Grenze, umfassend:

    - einen Kollektorspiegel (2), der eine Achse (3) aufweist,
    - eine Lichtquelle (S), die in der Nähe des inneren Brennpunkts des Kollektorspiegels (2) eingerichtet ist,
    - eine im Wesentlichen ebene Biegefläche (4), deren reflektierende Oberfläche zur Innenseite des Kollektorspiegels (2) hin ausgerichtet ist und die einen Rand (5) aufweist, der durch eine ebene Kurve gebildet wird,
- eine Linse (6), die vor dem Kollektorspiegel (2) und der Biegefläche (4) angeordnet ist, um ein Bild des Rands (5) der Biegefläche (4) zu erzeugen, das die Hell-Dunkel-Grenze des Lichtbündels definiert, **dadurch gekennzeichnet, dass** die Linse (6) so bestimmt ist, dass sich für jeden Abschnitt der Linse (6) durch eine Ebene orthogonal zum Rand (5) der Biegefläche an einem Punkt dieses Rands der Brennpunkt (Fho) des Abschnitts in einem Abstand (ho) vom Punkt des Rands (5) der Biegefläche (6) in einer Richtung orthogonal zur Ebene der Biegefläche befindet, wobei der Abstand ($h_0$) null sein kann und **dadurch gekennzeichnet, dass** der Abstand (ho) in Abhängigkeit von der Position des Punktes des Rands (5) der Biegefläche variabel ist.

2. Scheinwerfer nach Anspruch 1, **dadurch gekennzeichnet, dass** die Biegefläche horizontal ist und sich der Brennpunkt ($Fh_0$) des Abschnitts in einem vertikalen Abstand (ho) vom Rand (5) der Biegefläche (6) befindet.

3. Scheinwerfer nach einem der vorhergehenden Ansprüche, **dadurch gekennzeichnet, dass** für jeden Abschnitt der Linse (6) durch eine orthogonale Ebene zum Rand (5) der Biegefläche (6) an einem Punkt dieses Rands der obere Teil des Abschnitts, der oberhalb der Ebene der Biegefläche angeordnet ist, einen Brennpunkt ($Fh_0^+$) zulässt, der sich in einem Abstand ($h_0^+$) vom Rand (5) der Biegefläche (6) in einer zur Ebene der Biegefläche orthogonalen Richtung befindet, während der untere Teil des Abschnitts, der unterhalb der Ebene der Biegefläche angeordnet ist, einen Brennpunkt ($Fh_0^-$) zulässt, der sich in einem anderen Abstand ($h_0^-$) vom Rand (5) der Biegefläche (6) in einer Richtung orthogonal zur Ebene der Biegefläche befindet.

4. Scheinwerfer nach Anspruch 3, **dadurch gekennzeichnet, dass** die Abstände ($h_0^+$) und ($h_0^-$) der Brennpunkte ($Fh_0^+$) und ($Fh_0^-$) zum Rand der Biegefläche in entgegengesetzten Richtungen von der Mitte des Randes der Biegefläche zu deren seitlichen Enden variieren.

5. Scheinwerfer nach Anspruch 4 mit Hell-Dunkel-Grenze, **dadurch gekennzeichnet, dass** für den oberen Teil der Linse der Abstand $h_0^+(x)$ des Brennpunkts eines Abschnitts zum Rand der Biegefläche von der Mitte des Rands der Biegefläche zu deren seitlichen Enden abnimmt und beim unteren Teil der Linse der Abstand $h_0^-(x)$ des Brennpunkts eines Abschnitts zum Rand der Biegefläche von der Mitte des Rands der Biegefläche zu deren seitlichen Enden zunimmt.

6. Scheinwerfer nach Anspruch 5, **dadurch gekennzeichnet, dass** für den oberen Teil der Linse der Abstand $h_0^+(0)$ vom Brennpunkt zum Rand der Biegefläche in der Mitte null ($h_0^+(0)=0$) ist, wobei dieser Abstand in Richtung der seitlichen Enden des Rands negativ wird, während für den unteren Teil der Linse der Abstand $h_0^-(x)$ vom Brennpunkt zum Rand der Biegefläche an den seitlichen Enden des Rands der Biegeflächen null ($h_0^-=0$) und in der Mitte negativ ist.

7. Scheinwerfer nach einem der vorhergehenden Ansprüche mit einem konvergenten Modul, **dadurch gekennzeichnet, dass** die Linse (6) eine Vorderseite, die einen aktiven Bereich (6Sa) aufweist, und mindestens einen nicht aktiven Bereich (6Sb, 6Sc) umfasst.

8. Scheinwerfer nach Anspruch 7, **dadurch gekennzeichnet, dass** die Oberfläche des aktiven Bereichs (6Sa) kleiner ist als die Oberfläche der Eintrittsseite (6E) der Linse.

## Claims

1. Motor-vehicle headlamp (1) for providing a cutoff - containing light beam, comprising:

   - a collecting mirror (2) having an axis (3),
   - a light source (S) placed in the vicinity of the internal focal point of the collecting mirror (2),
   - a substantially planar deflector (4) the reflective surface of which is oriented toward the interior of the collecting mirror (2) and that has an edge (5) formed by a planar curve,
   - a lens (6), which is located in front of the collecting mirror (2) and of the deflector (4), for providing an image of the edge (5) of the deflector (4) that defines the cutoff of the beam,

   **characterized in that** the lens (6) is defined in such a way that, for each section of the lens (6) by a plane orthogonal to the edge (5) of the deflector, at a point on this edge, the focal point (Fho) of said section is located at a distance ($h_0$) from the point on the edge (5) of the deflector (6) in a direction orthogonal to the plane of the deflector, the distance (ho) possibly being zero,
   **and in that** the distance ($h_0$) is variable as a function of the position of the point on the edge (5) of the deflector.

2. Headlamp according to Claim 1, **characterized in that** the deflector is horizontal and the focal point (Fho) of said section is located at a vertical distance ($h_0$) from the edge (5) of the deflector (6) .

3. Headlamp according to either one of the preceding claims, **characterized in that**, for each section of the lens (6) by a plane orthogonal to the edge (5) of the deflector (6), at a point on this edge, the top portion of the section located above the plane of the deflector has a focal point ($Fh_0^+$) located at a distance ($h_0^+$) from the edge (5) of the deflector (6) in a direction orthogonal to the plane of the deflector, while the bottom portion of the section located below the plane of the deflector has a focal point ($Fh_0^-$) located at another distance ($h_0^-$) from the edge (5) of the deflector (6) in a direction orthogonal to the plane of the deflector.

4. Headlamp according to Claim 3, **characterized in that** the distances ($h_0^+$) and ($h_0^-$) from the focal points ($Fh_0^+$) and ($Fh_0^-$) to the edge of the deflector vary inversely, from the centre of the edge of the deflector to its lateral ends.

5. Headlamp according to Claim 4, containing a horizontal cutoff, said headlamp being **characterized in that**, as regards the top portion of the lens, the distance $h_0^+(x)$ from the focal point of a section to the edge of the deflector decreases from the centre of the deflector edge to its lateral ends, and, as regards the bottom portion of the lens, the distance $h_0^+(x)$ from the focal point of a section to the edge of the deflector increases from the centre of the deflector edge to its lateral ends.

6. Headlamp according to Claim 5, **characterized in that**, as regards the top portion of the lens, the distance $h_0^+(0)$ from the focal point to the edge of the deflector is zero ($h_0^+(0)=0$) at the centre, this distance becoming negative in the direction of the lateral ends of the edge, while, as regards the bottom portion of the lens, the distance $h_0^-(x)$ of the focal point to the edge of the deflector is zero ($h_0 = 0$) at the lateral ends of the edge of the deflector and is negative at the centre.

7. Headlamp according to any one of the preceding claims comprising a convergent module, said headlamp being **characterized in that** the lens (6) comprises a front face having an active region (6Sa) and at least one inactive region (6Sb, 6Sc).

8. Headlamp according to Claim 7, **characterized in that** the area of the active region (6Sa) is smaller than the area of the entrance face (6E) of the lens.

FIG.1

FIG.2

FIG.3

FIG.4

FIG.5

FIG.6

FIG.7

FIG.8

**RÉFÉRENCES CITÉES DANS LA DESCRIPTION**

**Documents brevets cités dans la description**

- FR 2940404

- EP 1610057 A